# EUROPÄISCHE PATENTSCHRIFT

(11) **EP 3 326 787 B1**
(45) Veröffentlichungstag und Bekanntmachung des Hinweises auf die Patenterteilung: **05.08.2020**
(21) Anmeldenummer: 17203364.9
(22) Anmeldetag: 23.11.2017
(51) Int. Cl.: B29C 65/02, B29C 70/88, B23K 33/00, B29K 305/00, B29L 31/30

(54) **VERBINDUNGSELEMENT FÜR METALLISCHEN WERKSTOFF UND FASERVERSTÄRKTEN WERKSTOFF**
CONNECTING ELEMENT FOR METALLIC MATERIAL AND FIBRE REINFORCED MATERIAL
ÉLÉMENT DE LIAISON POUR MATÉRIAU MÉTALLIQUE ET MATÉRIAU RENFORCÉ PAR DES FIBRES

(30) Priorität: 24.11.2016 DE 102016122722
(43) Veröffentlichungstag der Anmeldung: 30.05.2018
(73) Patentinhaber: Hyconnect GmbH, 22305 Hamburg (DE)
(72) Erfinder: Dr. Molter, Lars, 22305 Hamburg (DE)
(74) Vertreter: Patentanwälte Olbricht Buchhold Keulertz

(56) Entgegenhaltungen:
- DE-A1-102008 047 333
- US-A- 3 956 564

## Beschreibung

Gegenstand der Erfindung ist ein Verbindungselement für einen metallischen Werkstoff in Form von Vollmaterial mit einem nichtmetallischen faserverstärkten Werkstoff, umfassend mindestens eine metallische Faser und ein Verfahren zur Herstellung einer Verbindung eines metallischen Werkstoffs mit einem faserverstärkten Werkstoff.

In vielen verschiedenen industriellen Bereichen, wie im Automobilbau, im Flugzeugbau, im Schiffsbau, sind Metalle, insbesondere Stahl und Aluminium, die wichtigsten Werkstoffe. Stahl ist beispielsweise durch seine Eigenschaften und kosteneffizienten Verarbeitungstechniken im Schiffbau und Offshore-Bereich in vielerlei Hinsicht der optimale Werkstoff. Im Zuge der Anpassung an neue Designs und Gewichtsreduzierung geraten Leichtbaustrukturen immer mehr in den Fokus. Eine besondere Rolle spielen hierbei faserverstärkter Werkstoffe (FVW).

Eine besondere Herausforderung stellt die Verbindung der klassischen metallischen Werkstoffe mit den Leichtbau-Materialien aus Faserverstärkten Werkstoffen dar. Das Fügen von unterschiedlichen Werkstoffen, insbesondere, das Fügen von metallischen und nicht metallischen Werkstoffen erfolgt bisher mittels formschlüssiger, kraftschlüssiger Verbindungsmethoden , wie z.B. Nieten, Bolzen, Schrauben, Falzen, etc. oder mittels stoffschlüssiger Verbindungsmethoden, wie z.B. Schweißen, Kleben. Diese Verbindungsmethoden benötigen entweder zusätzliche Konstruktionsdetails und/oder Hilfsstoffe und Hilfsmittel, wie z.B. Kleber, Nieten, etc. Dabei sind die eigentlichen Verbundpartner mechanisch entkoppelt und nur über das Verbindungsmittel gefügt. Hierdurch reduziert sich oft die eigentliche Tragfähigkeit der Fügepartner.

Ein weiteres Problem von den aktuellen Fügeverfahren ist, dass eine Überlappung von beiden Werkstoffen nötig ist, um die Kräfte zu übertragen. Dafür kommt es lokal zu einem dickeren Aufbau, welches vom Gesichtspunkt des (1) Leichtbaus (zusätzliches Material) und (2) von aerodynamischen oder hydrodynamischen Gründen problematisch sein kann. Außerdem, entsteht, wenn nicht konstruktiv entgegen gewirkt wird, wegen der nicht axialen Auslegung der Verbindung im Bezug auf die Belastung, eine Schälbeanspruchung in der überlappten Verbindung.

Die DE 10 2008 047 333 A1 beschreibt eine Verbindung zwischen einem monolithischen Metallbauteil und einem endlos faserverstärkten Laminatbauteil. Die Verbindung enthält eine erste Zone mit einem Metallgitter oder Metalldrähten und eine zweite Zone mit einer Laminatschichtstruktur. Das Laminat ist ein kohlenfaserverstärkter Kunststoff. Die Faserenden weisen Schlaufen auf, die am Metallgitter oder den Metalldrähten befestigt sind. Die gesamte Struktur hängt von der Festigkeit und Haltbarkeit der Schlaufen aus den nichtmetallischen Fasern ab.

Aus US 3,956,564 ist ein Kompositartikel mit dicht gepackten Metalldrähten und nichtmetallischen Fasern, wie Kohlenstofffasern bekannt. Die Drähte und Fasern werden in variabler Länge alle in die gleiche Richtung ausgerichtet und mit einem Kunststoff als Bindemittel miteinander verklebt.

Aufgabe der Erfindung ist es eine Verbindung zwischen einem metallischen Werkstoff und einem faserverstärkten Werkstoff bereitzustellen, die die vorstehend beschriebenen Nachteile überwindet.

Die Aufgabe wird erfindungsgemäß gelöst durch ein Verbindungselement gemäß Patentanspruch 1.

Weitere Ausführungsform sind Gegenstand der Unteransprüche oder nachfolgend beschrieben.

Das erfindungsgemäße Verbindungselement für die Verbindung eines metallischen Werkstoffs in Form von Vollmaterial mit einem nichtmetallischen faserverstärkten Werkstoff umfasst mindestens eine metallische Faser. Erfindungsgemäß weist das Verbindungselement zusätzlich mindestens eine nichtmetallische Faser auf. Die mindestens eine metallische Faser und die mindestens eine nicht metallische Faser sind miteinander verbunden, besonders bevorzugt verwirkt und bilden ein hybrides Textilgebilde. Das hybride Textilgebilde hat eine Längsausdehnung mit zwei Endseiten. Entlang der Längsausdehnung des hybriden Textilgewirks verläuft ein Gradient bezüglich der Materialzusammensetzung, d.h. über die Längsausdehnung hat das hybride Textilgewirk einen unterschiedlichen Faseranteil der beiden Faserarten innerhalb einer Lage. Das hybride Textilgebilde ist an einer Endseite bevorzugt zu mehr als 50% aus metallischer Faser und an einer zweiten Endseite bevorzugt zu mehr als 50 % aus der nichtmetallischen Faser gebildet. Der Materialanteil der metallischen Faser nimmt entsprechend entlang der Längsausdehnung ab und der Materialanteil der nichtmetallischen Faser nimmt zu. Der Begriff Materialanteil bezieht sich dabei nur auf das Textilgebilde und nicht auf den Harzanteil des FVW. Die Materialanteile im hybriden Textilgebilde von metallischer Faser und nicht metallischer Faser ergeben zusammen 100 %. Das hybride Textilgebilde ist einlagig oder mehrlagig aufgebaut. Bevorzugt weist jede Lage den beschriebenen Gradienten bezüglich der Materialzusammensetzung von metallischer und nichtmetallischer Faser auf. Dieser Gradient kann in jeder Lage unterschiedlich sein. Jede Lage kann eine unterschiedliche Faserorientierung haben.

Bevorzugt ist das hybride Textilgebilde an einer Endseite zu 100% aus metallischer Faser und an einer zweiten Endseite zu 100 % aus der nichtmetallischen Faser gebildet, besonders bevorzugt gewirkt. Das erfindungsgemäße Verbindungselement ist auf seiner Endseite mit mehr als 50% metallischer Faser schweißbar und lässt sich stoffschlüssig mit einem metallischen Werkstoff verbinden.

Das hybride Textilgebilde des erfindungsgemäßen Verbindungselements ist ein Gewirk, ein Gestrick, ein Gewebe oder ein Geflecht, besonders bevorzugt ein Gewirk. Unter hybrid wird dabei ein gemischtes Gebilde verstanden, das aus verschiedenen Materialien zusammengesetzt ist. Erfindungsgemäß umfasst der Begriff Faser auch Fäden und Drähte. Der Oberbegriff Faser dient nur der sprachlichen Vereinfachung. Unter Faden werden linienförmige textile Artikel verstanden, die aus einer oder mehrerer Fasern bestehen. Der Begriff Faden umfasst dabei auch linienförmige textile Artikel wie einfache Garne, Zwirne oder Schnüre. Unter Draht wird linienförmig, biegsames, ausgezogenes Metall verstanden.

Unter Gewirk wird erfindungsgemäß ein Textilgebilde verstanden, das durch das Verbinden einzelner Fäden zu Maschen durch Nadeln hergestellt werden. Bevorzugt sind die Gewirke Kettengewirke. In einem Kettengewirk gibt es eine oder mehrere Fadenketten. Zur Maschenbildung werden die Kettfäden um die Nadeln herumgelegt. Die maschenbildenden Fäden verlaufen in Längsrichtung durch das Kettengewirk. Alternativ zu den Fäden, können auch Drähte benutzt werden.

Unter Gestrick wird erfindungsgemäß ein Textilgebilde verstanden, bei dem Maschen durch einen einzelnen Faden ausgebildet werden, der nacheinander den einzelnen Nadeln zugeführt wird. Der Faden verläuft in Querrichtung durch das Gestrick. Alternativ zu den Fäden, können auch Drähte benutzt werden.

Unter Gewebe wird erfindungsgemäß ein Textilgebilde verstanden, dass durch das kreuzen zweier Fadensysteme entsteht. Der Kettfaden und der Schussfaden im Gewebe verlaufen senkrecht zueinander. Alternativ zu den Fäden, können auch Drähte benutzt werden.

Unter Geflecht wird erfindungsgemäß ein Textilgebilde verstanden, dass durch das kreuzen von Fäden entsteht, wobei die Flechtfäden sich schräg zu den Kanten des Textilgebilde verkreuzen. Alternativ zu den Fäden, können auch Drähte benutzt werden.

Der Gradient bezüglich der Materialzusammensetzung im hybriden Textilgewirk wird bevorzugt durch die Anzahl der Maschen pro Werkstoff in benachbarten Reihen erzeugt. Bevorzugt nimmt die Anzahl der Maschen der metallischen Faser ab, während die Anzahl der Maschen der nichtmetallischen Faser zunimmt. Dabei haben mehrere benachbarte Reihen bevorzugt die gleiche Maschenverteilung und die Anzahl Maschen pro Reihe wechselt erst nach mehreren gleichen Reihen. Die Maschen der gleichen Faserart sind in einer Reihe einzeln, paarweise oder blockweise angeordnet. Bevorzugt besteht der äußere Rand des Textilgebildes jeweils aus Maschen der Faser mit dem höheren Materialanteil in dieser Reihe. Auf der Endseite des hybriden Textilgebildes mit über 50 % metallischer Faser liegen entsprechend mehr Maschen aus metallischer Faser als aus nicht nichtmetallischer Faser vor. So können z.B. je 10 Maschen 6-10 Maschen aus metallischer Faser gebildet sein.

Durch die Verwirkung, Verstrickung, Verwebung oder Verflechtung der metallischen Faser mit der nichtmetallischen Faser wird eine feste Verbindung zwischen den unterschiedlichen Werkstoffen hergestellt. Die metallische Endseite des erfindungsgemäßen Textilgebildes kann über übliche Verbindungstechniken , wie z.B. Schmelz-schweißverfahren oder Pressschweißverfahren mit metallischem Vollmaterial verbunden werden. Grundsätzlich sind für die metallische Endseite, insbesondere bei Stahl, alle üblichen Verbindungstechniken für Metalle einsetzbar, wie Schrauben, Nieten, Schweißen oder Löten.

Alternativ dazu, kann die metallische Endseite des erfindungsgemäßen Verbindungselement mit einem metallischen Anschlusselement mit üblichen Verbindungstechniken, wie z.B. Schmelzschweißverfahren oder Pressschweißverfahren verbunden werden, welches dann wiederum mit einem metallischen Bauteil mit allen üblichen Verbindungstechniken für Metalle, wie Schraube, Nieten, Schweißen oder Löten, verbunden werden kann.

Das erfindungsgemäße Verbindungselement weist eine hohe Flexibilität hinsichtlich der Geometrie auf. Durch die hohe Flexibilität des hybriden Textilgebildes sind beliebige Geometrien des erfindungsgemäßen Verbindungselements realisierbar. Während über viele herkömmliche Verbindungselemente nur die Verbindung von geraden, ebenen metallischen Werkstoffen miteinander möglich ist, können über das erfindungsgemäße Verbindungselement metallische und nicht metallische Bauteile mit beliebiger Geometrie, auch mit Rundungen miteinander verbunden werden. Auch die Verbindung von Rohren ist über das erfindungsgemäße Verbindungselement möglich.

Die nichtmetallische Faser im erfindungsgemäßen Verbindungselement ist bevorzugt ausgewählt aus der Gruppe bestehend aus Glasfasern, Basaltfasern, Keramikfasern, Aramidfasern, wie z.B. Kevlar®, Carbonfasern, Kunststofffasern, Naturfasern und Mischungen hiervon.

Die metallische Faser oder Draht im erfindungsgemäßen Verbindungselement ist bevorzugt ausgewählt aus der Gruppe bestehend aus Eisen, Stahl, Kupfer, Bronze, Aluminium, Titan, Gold und Silber, bevorzugt Stahl, Titan und Aluminium, besonders bevorzugt Stahl.

Bevorzugt besteht das erfindungsgemäße Verbindungselement aus einer metallischen Faser oder Draht aus Stahl, Aluminium oder Titan und Glasfaser oder Kohlefaser.

In einer Ausführungsform weist das erfindungsgemäße Verbindungselement ein metallisches Anschlusselement auf, das stoffschlüssig mit der Endseite des Gewirks verbunden ist, die zu 100 % aus metallischer Faser besteht. Bevorzugt ist das Anschlusselement mit der Endseite verschweißt oder verlötet. In diese Ausführungsform besteht das metallische Anschlusselement bevorzugt aus Vollmaterial, besonders bevorzugt aus Eisen, Stahl, Titan, Kupfer oder Aluminium, weiter besonders bevorzugt Edelstahl oder Schiffsbaustahl. Die metallische Faser ist in diesem Falle bevorzugt aus Stahl, Titan oder Aluminium.

In einer Ausführungsform besteht das erfindungsgemäße Verbindungselement aus einer mehrlagigen textilen Flächengebild, bevorzugt bilden diese Lagen ein Gewirk. Besonders bevorzugt hat das erfindungsgemäße Verbindungselement eine ungerade Anzahl von Lagen textiler Flächengebilde, weiter besonders bevorzugt 3 oder 5 Lagen. Bevorzugt haben die Lagen einen unterschiedlichen Gradient, wobei bevorzugt die mittlere Kernlage die weiteste Erstreckung der metallischen Faser entlang der Längsausdehnung aufweist. Diese Lagen können miteinander verbunden sein. Bevorzugt werden die Lagen durch Schlaufen aus metallischen oder nichtmetallischen Fäden zusammengehalten und können in verschiedene Richtungen ausgerichtet sein, besonders bevorzugt in 0°, ±45° oder 90° zur Längsrichtung

In einer Ausführungsform besteht das erfindungsgemäße Verbindungselement aus einem Gewirk, welches dreilagig aufgebaut ist. Die erste Lage ist ein hybrides Textilgebilde mit einem Übergang zwischen Stahlfaser und Glasfaser in Schussrichtung (x), das über Teilschlüsse jeweils aus Glasfasern und Stahlfaser gefertigt ist. Die zweite, mittlere Lage, ist ein hybrides Textilgebilde aus purer Stahlfaser in Schussrichtung, die sich über die gesamte Länge des erfindungsgemäßen Verbindungselements erstreckt. Die dritte Lage hat in X Richtung einen kurzen Stahlfaseranteil und einen langen Glasfaseranteil. Der Glasfaseranteil ist über Teilschüsse gefertigt. Alle Schussfäden sind Schlaufen. Die drei Lagen sind durch Schlaufen miteinander verbunden.

In einer weiteren Ausführungsform besteht das erfindungsgemäße Verbindungselement aus fünf verschiedenen Lagen Gewirk. Die erste Lage ist ein hybrides Textilgebilde mit einem Übergang zwischen Stahlfaser und Glasfaser in Schussrichtung (x), das über Teilschlüsse jeweils aus Glasfasern und Stahlfaser gefertigt ist. Die zweite Lage ist ein hybrides Textilgebilde, mit einem Übergang in Schussrichtung (x), das über eine Zone mit Stehfäden (in y Richtung) aus Stahlfasern und einer weiteren Zone mit Stehfäden aus Glasfasern besteht. Die dritte, mittlere Lage ist ein hybrides Textilgebilde aus pure Stahlfaser in Schussrichtung, die sich nicht über die gesamte Länge des erfindungsgemäßen Verbindungselements erstreckt. Die vierte Lage ist ein hybrides Textilgebilde, mit einem Übergang in Schussrichtung (x), das über eine Zone mit Stehfäden (in y Richtung) aus Stahlfasern und einer weiteren Zone mit Stehfäden aus Glasfasern besteht. Die fünfte Lage hat in X Richtung einen kurzen Stahlfaseranteil und einen langen Glasfaseranteil. Der Glasfaseranteil ist über Teilschüsse gefertigt. Alle Schussfäden sind Schlaufen. Die fünf Lagen sind durch Schlaufen miteinander verbunden.

Abhängig vom Einsatzbereich wird das erfindungsgemäße Verbindungselement unterschiedlichen Kräften ausgesetzt. Bei einigen Einsatzbereichen ist nur eine Zugbelastung gegeben. Bei anderen Einsatzbereichen eine Zug- und Scherbelastung. Sofern Belastungen auch außerhalb der X- und Y-Richtung erfolgen, werden die einzelnen Lagen optional in Z-Richtung verbunden. Hierfür werden zwei oder mehrere Lagen mit einem zusätzlichen Faden oder einer zusätzlichen Faser verbunden, bevorzugt durch Tufting. Beim Tufting werden dreidimensionale Textilen erstellt, indem mehre textile Lagen, z.B. Gewirk, durch Schlaufen miteinander verbunden werden. Die Schlaufen werden durch Nadeln in das Material eingebracht.

Gegenstand der Erfindung ist weiterhin ein Verfahren gemäß Patentanspruch 10.

Das erfindungsgemäße Verfahren zur Herstellung einer Verbindung eines metallischen Werkstoffs mit einem faserverstärkten Werkstoff erfolgt unter Verwendung des erfindungsgemäßen Verbindungselements. In einem 1. Schritt wird das erfindungsgemäße Verbindungselement
1a) an seiner einen Endseite mit einem metallischen Werkstoff stoffschlüssig verbunden, bevorzugt mittels Schweißen oder Löten oder
1b) an seiner einen Endseite mit einem metallischen Anschlusselement stoffschlüssig verbunden, bevorzugt mittels Schweißen oder Löten.

In einem nachfolgenden Schritt des erfindungsgemäßen Verfahrens wird das erfindungsgemäße Verbindungselement an seiner anderen Endseite mittels Laminieren formschlüssig mit dem faserverstärkten Werkstoff verbunden.

Wenn das erfindungsgemäße Verfahren im 1. Schritt gemäß Schritt 1b) durchgeführt wird und im nachfolgenden Schritt die anderen Endseite des Textilgebildes mittels Laminieren formschlüssig mit dem faserverstärkten Werkstoff verbunden wird, wird anschließend das Anschlusselement stoffschlüssig, formschlüssig oder kraftschlüssig mit einem metallen Werkstoff verbunden, bevorzugt durch Schweißen oder Löten.

Wenn eine stoffschlüssige Verbindung zwischen dem erfindungsgemäßen Verbindungselement und dem metallischen Werkstoff mit Laserschweißen hergestellt wird besteht die eine Endseite des hybriden Textilgebildes bevorzugt aus 100 % metallischer Faser.

Für eine stärkere Verbindung ist es auch möglich, mehrere erfindungsgemäße Verbindungselemente übereinander auf einem Metallteil zu befestigen und übereinander zulegen, bevorzugt in einer fächerartigen Auslegung. Die übereinander liegenden Verbindungselemente werden dann gemeinsam mit dem FVW-Teil verbunden.

Ein weiterer Vorteil des erfindungsgemäßen Verfahrens ist, dass durch das hybride Textilgebilde, dass aus dem Material der miteinander zu verbindenden Werkstoffe besteht, eine kraftschlüssige Verbindung der verschiedenen Materialien zu einander entsteht, da die Lastübertragung unter anderem mittels der verwirkten Fasern geschieht. Die Lastübertragung geschieht nicht nur über die Maschen der verwirkten Fasern sondern auch dadurch, dass die nichtmetallischen Faserns und metallischen Fasern sich überlappen. Parallel zur kraftschlüssigen Verbindung, besteht somit eine Reibverbindung zwischen den metallischen und nichtmetallischen Fasern (Fäden / Drähten), da sich diese überlappen. Durch den unterschiedlichen Faseranteil im Textilgebilde über die Längsausdehnung, von z.B.100% des einen Materials auf der einen hin zu z.B. 100 % des anderen Material auf der anderen Seite, wird im Falle von Stahl als ein Verbundmaterial, dieses auf der entsprechenden Seite an ein Stahlhalbzeug stoffschlüssig verbunden. Auf der FVW-Seite, kann das Verbindungselement mit FVW gängigen Verfahren gefügt werden, z.B. Überlappung der einzelnen Schichten. Mehrere Lagen eines Gewirks können so gefügt werden; es entsteht ein Laminataufbau.

Die Verbindung, die mittels des erfindungsgemäßen Verbindungselements bzw. Verfahrens erzeugt wird, besteht aus drei Teilen, Stahl-Hybridmaterial-FVW, und kann mittels Schweißen beziehungsweise Laminieren die unterschiedlichen Bauteile verbinden. Dabei kommt die Verbindung ohne zusätzliche Komponenten wie z.B. Kleber oder Bolzen, etc. aus. Die Kraftübertragung in der Verbindung wird über einen Stoffschluss, bzw. Formschluss gewährleistet. Vorteil dieser Verbindung ist die höhere Belastbarkeit im Vergleich zu Klebeverbindungen, sowie die bessere Integration des erfindungsgemäßen Verbindungselements in die üblichen Produktionsabläufe, wie schweißen und laminieren.

Das erfindungsgemäße Verbindungselement und das erfindungsgemäße Verfahren sind universell einsetzbar in allen Bereichen in denen faserverstärkte Werkstoffe mit einem metallischen Werkstoff verbunden werden müssen. Bevorzugt wird das erfindungsgemäße Verbindungselement im Schiffsbau, Automobilbau, Flugzeugbau, Offshore-Bereich, Schienenfahrzeugbau und dem Bauwesen, besonders bevorzugt im Schiffsbau, Schienenfahrzeugbau und Automobilbau eingesetzt.

Die Erfindung wird anhand der nachfolgenden Figuren mehr erläutert. Das zeigen
Figur 1 den schematischen Aufbau ein erfindungsgemäßes Verbindungselement im eingebauten Zustand, wobei Figur 1a den direkten Anbau an ein metallisches Bauteil repräsentiert und Figur 1b die Benutzung eines Anschlusselementes
Figur 2 eine weitere Ausführungsform eines erfindungsgemäßen Verbindungselement, wo mehrere Lagen benutzt werden
Figur 3 eine weitere Ausführungsform eines erfindungsgemäßen Verbindungselement
Figur 4 eine weitere Ausführungsform eines erfindungsgemäßen Verbindungselement und
Figur 5 mehrere erfindungsgemäße Verbindungselemente die an einem metallischen Werkstoff befestigt sind.

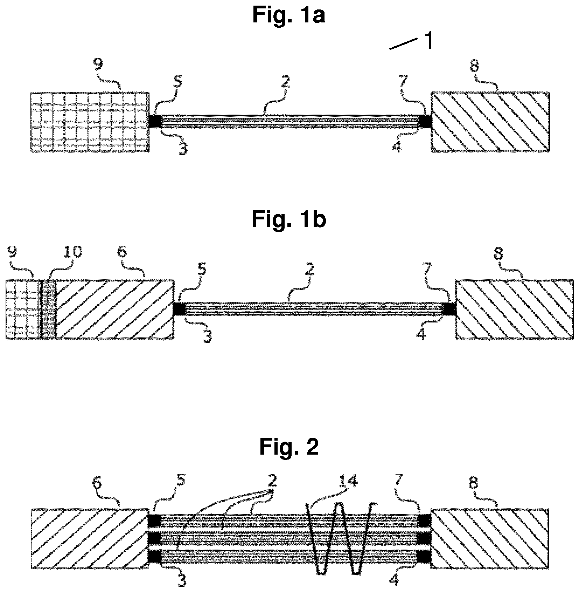

Figur 1a und b zeigt ein erfindungsgemäßes Verbindungselement 1 (bestehend aus 2,3,4,5 und ggf. 6) aus einem hybriden Textilgebilde 2. Das hybride Textilgebilde 2 weist eine erste Endseite 3 auf, die zu über 50 % aus einer metallischen Faser besteht. Die zweite Endseite 4 besteht zu über 50 % aus nicht metallischer Faser. Entlang der Längsausdehnung x des hybriden Textilgebildes 2 verläuft ein Gradient bezüglich der Materialzusammensetzung. Die 1. Endseite 3 ist über eine Schweißnaht 5 mit einem Stahlbauteil 9 bzw. dem metallischen Anschlusselement 6 verbunden. Die 2. Endseite 4 ist über eine Laminatverbindung 7 mit einem FVW-Bauteil 8 verbunden.

Figur 2 zeigt eine weitere Ausführungsform eines erfindungsgemäßen Verbindungselement 1, wo mehrere Lagen vom Textilgebilde 2 benutzt werden. Diese können in Dickenrichtung mit einander verbunden mit einem Fadensystem 14, z.B. durch Tufting, verbunden werden.

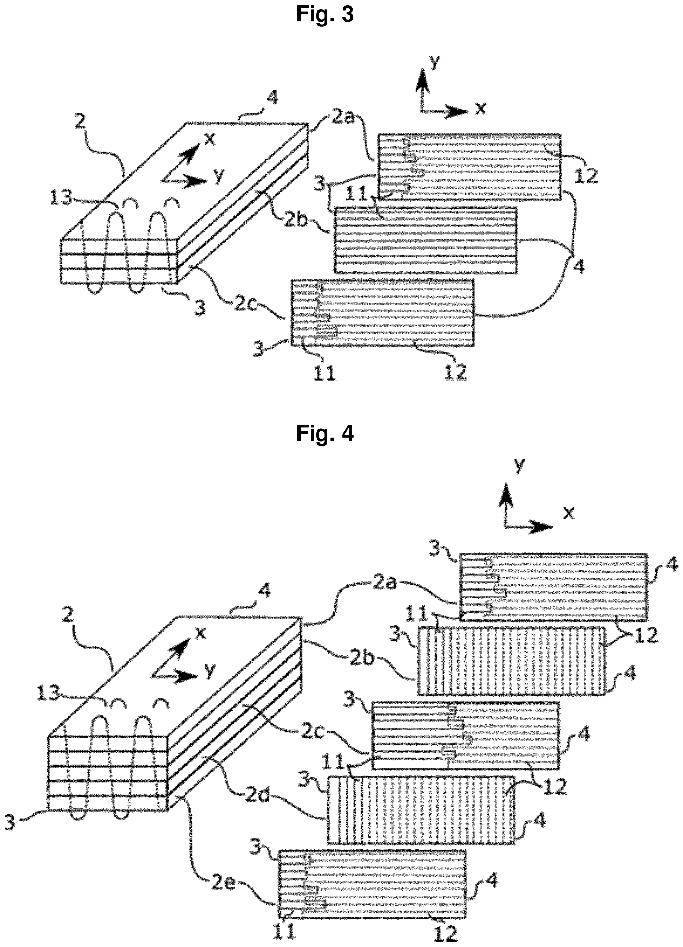

Figur 3 zeigt eine mögliche Ausführungsform eines erfindungsgemäßen hybriden Textilgebildes 2. Das Textilgebilde ist aus 3 Lagen eines hybriden Textilgebilde 2a, 2b und 2c aufgebaut. Die 1. Lage 2a weist einen Gradienten zwischen einer metallischen Faser 11 und einer nicht metallischen Faser 12 auf. Die 2. Lage 2b besteht hauptsächlich aus metallischer Faser 11. Die 3. Lage 2c weist wiederum einen Gradienten zwischen metallischen Faser 11 und nicht metallischer Faser 12 auf, wobei diese blockförmig aneinander gesetzt sind und sich der Gradient von Lage 2a und 2c unterscheidet. Diese 3 Lagen sind durch Schlaufen 13 miteinander verbunden.

Figur 4 zeigt eine weitere Ausführungsform eines erfindungsgemäßen Verbindungselements 1. Das erfindunggemäße Verbindungselement 1 ist aus 5 Lagen eines hybriden Textilgebilde 2a, 2b, 2c, 2d und 2e aufgebaut. Die 1. Lage 2a weist einen Gradienten in Schussrichtung (x-Richtung) zwischen einer metallischen Faser 11 und einer nicht metallischen Faser 12 auf. Die metallische Faser 11 und nichtmetallische Faser 12 sind in x- Richtung ausgelegt. Die 2. Lage 2b weist einen Gradienten in Längsrichtung zwischen einer Stahlfaser 11 und einer Glasfaser 12 auf. Die metallische Faser 11 und nicht metallische Faser 12 sind entlang der Breite (y-Richtung) ausgerichtet. Die 3. Lage 2c weist einen Gradienten zwischen metallischen Faser 11 und der nicht metallischen Faser 12 auf, und sind entlang der Schussrichtung ausgerichtet. Die 4. Lage 2d weist einen Gradienten zwischen metallischen Faser 11 und nicht metallischen Faser 12. Die metallische Faser 11 und nicht metallische Faser 12 sind entlang der Breite (y-Richtung) ausgelegt. Die 5. Lage 2e weist einen Gradienten zwischen metallischen Faser 11 und nicht metallischen Faser 12 auf. Die metallische Faser 11 und nicht metallische Faser 12 sind entlang der Länge ausgelegt. Der Gradient von Lage 2a, 2c und 2e unterscheidet sich in sofern, dass die verschiedenen Lagen einen unterschiedlichen oder versetzten Gradienten haben. Die Lage 2c erstreckt sich am weitesten.

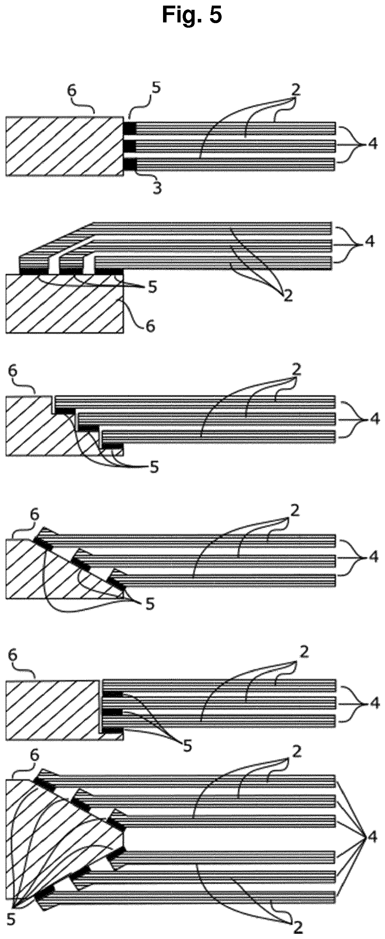

Figur 5 zeigt verschiedene Arten der Befestigung beispielhaft hybriden Textilfläche 2 an einem metallischen Anschlusselement 6. Diese Befestigungsarten sind auch für den direkten Anschluss an Metallbauteile 9 übertragbar.

**Bezugszeichenliste**

| | |
|---|---|
| Verbindungselement | 1 |
| hybrides Textilgebilde | 2 |
| erste Endseite | 3 |
| zweite Endseite | 4 |
| Längsausdehnung | x |
| Querausdehnung | y |
| Metall-Textilgebilde Verbindung | 5 |
| Metallisches Anschlusselement | 6 |
| Laminatverbindung | 7 |
| FVW-Bauteil | 8 |
| metallisches-Bauteil | 9 |
| Metall- Metall Verbindung | 10 |
| metallische Faser | 11 |
| nichtmetallische Faser | 12 |
| Schlaufen | 13 |
| Fäden durch die Dicke | 14 |

## Patentansprüche

1. Verbindungselement (1) für einen metallischen Werkstoff (9) mit einem nichtmetallischen faserverstärkten Werkstoff (8) umfassend mindestens eine metallische Faser (11)
wobei
- das Verbindungselement (1) zusätzlich mindestens eine nichtmetallische Faser (12) aufweist,
- **dadurch gekennzeichnet, dass** die mindestens eine metallische Faser (11) und die mindestens eine nicht metallische Faser (12) miteinander verbunden sind und ein hybrides Textilgebilde (2) bilden,
- das hybride Textilgebilde (2) eine Längsausdehnung (x-Richtung) mit zwei Endseiten (3,4) hat, und
- entlang der Längsausdehnung (x-Richtung) des hybriden Textilgebildes (2) ein Gradient bezüglich der Materialzusammensetzung verläuft und das hybride Textilgebilde (2) an einer Endseite (3) zu mehr als 50% aus metallischer Faser und an einer zweiten Endseite (4) zu mehr als 50 % aus der nichtmetallischen Faser gebildet ist und
- das hybride Textilgebilde (2) ein Gewirk, ein Gestrick, ein Gewebe oder ein Geflecht ist

2. Verbindungselement (1) gemäß Patentanspruch 1, **dadurch gekennzeichnet, dass** das hybride Textilgebilde (2) an einer Endseite (3) 50% bis zu 100%, bevorzugt 100%, aus metallischer Faser (11) und an einer zweiten Endseite (4) 50% bis zu 100 %, bevorzugt 100%, aus der nichtmetallischen Faser (12) gebildet ist.

3. Verbindungselement (1) gemäß Patentanspruch 1 oder 2, **dadurch gekennzeichnet, dass** das hybride Textilgebilde (2) ein Gewirk ist.

4. Verbindungselement (1) gemäß einem der vorhergehenden Patentansprüche, **dadurch gekennzeichnet, dass** die nichtmetallische Faser (12) ausgewählt ist aus der Gruppe bestehend aus Glasfasern, Basaltfasern, Keramikfasern, Aramidfasern, Carbonfasern, Kunstofffasern, Naturfasern und Mischungen hiervon.

5. Verbindungselement (1) gemäß einem der vorhergehenden Patentansprüche, **dadurch gekennzeichnet, dass** die metallische Faser ausgewählt ist aus der Gruppe bestehend aus Eisen, Stahl, Kupfer, Bronze, Aluminium, Titan, Gold und Silber, bevorzugt Stahl, Aluminium und Titan, besonders bevorzugt Stahl.

6. Verbindungselement (1) gemäß einem der vorhergehenden Patentansprüche, **dadurch gekennzeichnet, dass** das Verbindungselement (1) ein metallisches Anschlusselement (6) aufweist, das stoffschlüssig, bevorzugt verschweißt oder verlötet, mit der Endseite (3) des Gewirks verbunden ist, die aus 50% bis zu 100 %, bevorzugt 100%, aus metallischer Faser (11) besteht.

7. Verbindungselement (1) gemäß Patentanspruch 6, **dadurch gekennzeichnet, dass** das metallische Anschlusselement (6) aus Vollmaterial besteht, bevorzugt aus Eisen, Stahl, Titan, Kupfer oder Aluminium, besonders bevorzugt Edelstahl oder Schiffsbaustahl.

8. Verbindungselement (1) gemäß einem der vorhergehenden Patentansprüche, **dadurch gekennzeichnet, dass** das Verbindungselement mehrere Lagen textiles Flächengebilde (2) aufweist, bevorzugt mehrere Lagen Gewirk und die Lagen ggf. untereinander verbunden sind.

9. Verbindungselement (1) gemäß einem der vorhergehenden Patentansprüche, **dadurch gekennzeichnet, dass** das hybride Textilgebilde (2) mehrlagig aufgebaut ist, bevorzugt aus 3 bis 5 Lagen besteht, und die mittlere Kernlage, die weiteste Erstreckung der metallischen Faser entlang der Längsausdehnung aufweist, wobei die Lagen bevorzugt durch Schlaufen (13) aus metallischen oder nichtmetallischen Fäden zusammengehalten werden.

10. Verbindungselement (1) gemäß einem der vorhergehenden Patentansprüche, **dadurch gekennzeichnet, dass** jede Lage des hybriden Textilgebildes den Gradienten bezüglich der Materialzusammensetzung von metallischer und nichtmetallischer Faser aufweist.

11. Verfahren zur Herstellung einer Verbindung eines metallischen Werkstoffs (9) mit einem faserverstärkten Werkstoff (8), **dadurch gekennzeichnet, dass** ein Verbindungselement gemäß einem der vorhergehenden Patentsprüche in einem ersten Schritt
1a) an seiner einen Endseite (3) mit einem metallischen Werkstoff stoffschlüssig verbunden wird, bevorzugt mittels Schweißen oder Löten oder
1b) an seiner einen Endseite (3) mit einem metallischen Anschlusselement (6) stoffschlüssig verbunden wird, bevorzugt mittels Schweißen oder Löten.

12. Verfahren gemäß Patentanspruch 11, **dadurch gekennzeichnet, dass** das Verbindungselement (1) in einem nachfolgenden Schritt an seiner anderen Endseite (4) mittels Laminieren formschlüssig mit dem faserverstärkten Werkstoff (8) verbunden wird.

13. Verfahren gemäß Patentanspruch 12, **dadurch gekennzeichnet, dass** im ersten Schritt das Verfahren gemäß 1b) durchgeführt wird, im nachfolgenden Schritt die anderen Endseite (4) des Textilgebildes (2) mittels Laminieren formschlüssig mit dem faserverstärkten Werkstoff (8) verbunden wird und anschließend das Anschlusselement (6) stoffschlüssig mit einem metallen Werkstoff verbunden wird, bevorzugt durch Schweißen oder Löten.

## Claims

1. Connecting element (1) for connecting a metal material (9) to a non-metal fiber-reinforced material (8) comprising at least one metal fiber (11), wherein
- the connecting element (1) additionally having at least one non-metal fiber (12),
- **characterized in that** the at least one metal fiber (11) and the at least one non-metal fiber (12) are connected to one another and form a hybrid textile structure (2),
- the hybrid textile structure (2) has a longitudinal extent (x-direction) with two end faces (3, 4), and
- a gradient with respect to the material composition extends along the longitudinal extension (x-direction) of the hybrid textile structure (2) and the hybrid textile structure (2) is formed of more than 50% metal fiber at one end face (3) and more than 50% non-metal fiber at a second end face (4) and
- the hybrid textile structure (2) is a knitted fabric, a knit, a woven fabric or a braided fabric.

2. Connecting element (1) according to claim 1, **characterized in that** the hybrid textile structure (2) is formed of 50% to 100%, preferably 100%, metal fiber (11) at one end face (3) and 50% up to 100%, preferably 100%, non-metal fiber (12) at a second end face (4).

3. Connecting element (1) according to either claim 1 or claim 2, **characterized in that** the hybrid textile structure (2) is a knitted fabric.

4. Connecting element (1) according to any of the preceding claims, **characterized in that** the non-metal fiber (12) is selected from the group consisting of glass fibers, basalt fibers, ceramic fibers, aramid fibers, carbon fibers, plastics fibers, natural fibers and mixtures thereof.

5. Connecting element (1) according to any of the preceding claims, **characterized in that** the metal fiber is selected from the group consisting of iron, steel, copper, bronze, aluminum, titanium, gold and silver, preferably steel, aluminum and titanium, particularly preferably steel.

6. Connecting element (1) according to any of the preceding claims, **characterized in that** the connecting element (1) has a metal connection element (6), which is integrally bonded , preferably welded or soldered, to the end face (3) of the knitted fabric, which end face is made of 50% up to 100%, preferably 100%, metal fiber (11).

7. Connecting element (1) according to claim 6, **characterized in that** the metal connection element (6) consists of a single solid material, preferably of iron, steel, titanium, copper or aluminum, particularly preferably stainless steel or shipbuilding steel.

8. Connecting element (1) according to any of the preceding claims, **characterized in that** the connecting element has multiple layers of textile fabric (2), preferably multiple layers of knitted fabric, and the layers are optionally connected to one another.

9. Connecting element (1) according to any of the preceding claims, **characterized in that** the hybrid textile structure (2) is constructed in several layers, preferably consists of 3 to 5 layers, and the central core layer has the widest extension of the metal fiber along the longitudinal extent, the layers preferably being held together by loops (13) made of metal or non-metal threads.

10. Connecting element (1) according to any of the preceding claims, **characterized in that** each layer of the hybrid textile structure exhibits the gradient with respect to the material composition of metal and non-metal fibers.

11. Method for producing a connection of a metal material (9) to a fiber-reinforced material (8), **characterized in that** in a first step, a connecting element according to any of the preceding claims
1a) is integrally bonded on one end face (3) thereof to a metal material, preferably by means of welding or soldering, or
1b) is integrally bonded on one end face (3) thereof to a metal connection element (6), preferably by means of welding or soldering.

12. Method according to claim 11, **characterized in that** in a subsequent step, the connecting element (1) is positively connected on the other end face (4) thereof to the fiber-reinforced material (8) by means of lamination.

13. Method according to claim 12, **characterized in that** in the first step, the method according to 1 b) is carried out, in the subsequent step the other end face (4) of the textile structure (2) is positive locked to the fiber-reinforced material (8) by means of lamination, and the connection element (6) is then integrally bonded to a metal material, preferably by means of welding or soldering.

## Revendications

1. Élément de liaison (1) pour un matériau métallique (9) comportant un matériau non métallique renforcé par des fibres (8) comprenant au moins une fibre métallique (11), dans lequel
- l'élément de liaison (1) comprend en outre au moins une fibre non métallique (12),
- **caractérisé en ce que** l'au moins une fibre métallique (11) et l'au moins une fibre non métallique (12) sont reliées et forment une structure textile hybride (2),
- la structure textile hybride (2) présente une extension longitudinale (direction x) comportant deux côtés d'extrémité (3, 4), et
- un gradient s'étend le long de l'extension longitudinale (direction x) de la structure textile hybride (2) par rapport à la composition de matériaux et la structure textile hybride (2) est formée sur un côté d'extrémité (3) à plus de 50 % de fibres métalliques et sur un second côté d'extrémité (4) à plus de 50 % de fibre non métallique et
- la structure textile hybride (2) est un tissu tricoté ou crocheté, tissé ou tressé.

2. Élément de liaison (1) selon la revendication 1, **caractérisé en ce que** la structure textile hybride (2) est formée sur un côté d'extrémité (3) de 50 à 100 %, de préférence 100 %, de fibre métallique (11) et sur un second côté d'extrémité (4) de 50 à 100 %, de préférence 100 %, de fibre non métallique (12).

3. Élément de liaison (1) selon la revendication 1 ou 2, **caractérisé en ce que** la structure textile hybride (2) est un tissu tricoté.

4. Élément de liaison (1) selon l'une des revendications précédentes, **caractérisé en ce que** la fibre non métallique (12) est choisie dans le groupe constitué par les fibres de verre, les fibres de basalte, les fibres céramiques, les fibres d'aramide, les fibres de carbone, les fibres plastiques, les fibres naturelles et des mélanges celles-ci.

5. Élément de liaison (1) selon l'une des revendications précédentes, **caractérisé en ce que** la fibre métallique est choisie dans le groupe constitué par le fer, l'acier, le cuivre, le bronze, l'aluminium, le titane, l'or et l'argent, de préférence l'acier, l'aluminium et le titane, de manière particulièrement préférée l'acier.

6. Élément de liaison (1) selon l'une des revendications précédentes, **caractérisé en ce que** l'élément de liaison (1) comporte un élément de raccordement métallique (6) relié par liaison de matière, de préférence soudé ou brasé, au côté d'extrémité (3) du tissu tricoté, qui est constitué de 50 à 100 %, de préférence de 100 %, de fibre métallique (11).

7. Élément de liaison (1) selon la revendication 6, **caractérisé en ce que** l'élément de raccordement métallique (6) est constitué d'un matériau solide, de préférence de fer, d'acier, de titane, de cuivre ou d'aluminium, de manière particulièrement préférée d'acier inoxydable ou d'acier de construction navale.

8. Élément de liaison (1) selon l'une des revendications précédentes, **caractérisé en ce que** l'élément de liaison comprend plusieurs couches de structure textile plate (2), de préférence plusieurs couches de tissu tricoté, et les couches sont éventuellement reliées les unes aux autres.

9. Élément de liaison (1) selon l'une des revendications précédentes, **caractérisé en ce que** la structure textile hybride (2) est multicouche, constituée de préférence de 3 à 5 couches, et **en ce que** la couche de cœur centrale présente l'extension la plus large de la fibre métallique le long de l'extension longitudinale, dans lequel les couches sont de préférence maintenues ensemble par des boucles (13) en fils métalliques ou non métalliques.

10. Élément de liaison (1) selon l'une des revendications précédentes, **caractérisé en ce que** chaque couche de la structure textile hybride présente le gradient par rapport à la composition de matériaux de la fibre métallique et de la fibre non métallique.

11. Procédé d'établissement d'une liaison entre un matériau métallique (9) et un matériau renforcé par des fibres (8), **caractérisé en ce qu'**un élément de liaison selon l'une des revendications précédentes est relié par une liaison de matière dans une première étape
1a) sur l'un de ses côtés d'extrémité (3) à un matériau métallique, de préférence par soudage ou par brasage ou
1b) est relié par une liaison de matière sur l'un de ses côté d'extrémité (3) à un élément de raccordement métallique (6), de préférence par soudage ou par brasage.

12. Procédé selon la revendication 11, **caractérisé en ce que** l'élément de liaison (1) est relié sur son autre côté d'extrémité (4) au matériau renforcé par des fibres (8) par complémentarité de forme au moyen d'un laminage dans une étape suivante.

13. Procédé selon la revendication 12, **caractérisé en ce que**, à la première étape, le procédé selon 1b) est mis en œuvre, à l'étape suivante,l'autre côté d'extrémité (4) de la structure textile (2) est relié par complémentarité de forme au matériau renforcé par des fibres (8) au moyen d'un laminage, et ensuite l'élément de liaison (6) est relié par une liaison de matière à un matériau métallique, de préférence par soudage ou par brasage.
